# EUROPÄISCHE PATENTSCHRIFT

(11) **EP 3 253 973 B1**
(45) Veröffentlichungstag und Bekanntmachung des Hinweises auf die Patenterteilung: **05.12.2018**
(21) Anmeldenummer: 16700741.8
(22) Anmeldetag: 15.01.2016
(51) Int. Cl.: F16B 5/02

(54) **ANORDNUNG AUS EINEM ERSTEN UND EINEM ZWEITEN BAUTEIL**
ARRANGEMENT OF A FIRST AND A SECOND COMPONENT
ENSEMBLE COMPOSÉ D'UNE PREMIÈRE ET D'UNE SECONDE PIÈCE

(30) Priorität: 05.02.2015 DE 102015202036
(43) Veröffentlichungstag der Anmeldung: 13.12.2017
(73) Patentinhaber: Bayerische Motoren Werke Aktiengesellschaft, 80809 München (DE)
(72) Erfinder: BUI, Hoang Viet, 80933 München (DE)
(86) Internationale Anmeldenummer: PCT/EP2016/050757
(87) Internationale Veröffentlichungsnummer: WO 2016/124372

(56) Entgegenhaltungen:
- DE-A1- 3 109 566
- DE-A1-102004 035 540
- DE-A1-102014 007 793

## Beschreibung

Die Erfindung betrifft eine Anordnung aus einem ersten und einem zweiten Bauteil, von denen zumindest eines ein Faser-Kunststoff-Verbund-Bauteil (im Folgenden als FKV-Bauteil bezeichnet) ist.

FKV-Bauteile sind im Stand der Technik allgemein bekannt und werden in der Automobilindustrie in zunehmendem Maße zur Realisierung von Leichtbaukonstruktionen eingesetzt.

Wenn bei der Montage vorgesehen ist, dass solche FKV-Bauteile durch eine Schraubenverbindung montiert werden, sind Maßnahmen notwendig, um eine dauerhaft zuverlässige Schraubenverbindung sicherzustellen. Grund hierfür ist, dass der Faser-Kunststoff-Verbund ein starkes Kriechverhalten aufweist, durch das die Schraubenverbindung ihre Vorspannkraft verlieren kann - sogenanntes Setzen.

Damit das genannte Kriechverhalten des Faser-Kunststoff-Verbundes zu keinem Lösen oder Lockern der Schraubenverbindung führt, werden im Stand der Technik beispielsweise Metallbuchsen zur Durchführung der entsprechenden Schrauben an für die Montage bestimmten Stellen in das FKV-Bauteil eingeklebt.

Das Prinzip einer solchen eingeklebten Metallbuchse ist, dass die Vorspannkraft der Schraubenverbindung auf die Metallbuchse wirkt und die Kraftübertragung auf das FKV-Bauteil durch den die Buchse befestigenden Klebstoff übernommen wird.

Das Verwenden und Verkleben der erläuterten Metallbuchsen führt allerdings zu einem ungewünschten Zusatzgewicht des FKV-Bauteils und zur Erhöhung notwendiger Herstellungs- oder Montageschritte. Beispielsweise muss vor dem Verkleben der Metallbuchse die Oberfläche des FKV-Bauteils gereinigt werden, anschließend der Klebstoff aufgetragen und bis zu seiner Aushärtung gewartet werden.

Eine Anordnung gemäß dem Oberbegriff des Patentanspruches 1 findet sich in der Druckschrift DE 3109566 A1.

Darüber hinaus können bei einer fehlerhaften Klebstoffverbindung Steifigkeitsverluste auftreten, die zu Stabilitätsproblemen führen.

Vor diesem Hintergrund ist es Aufgabe der vorliegenden Erfindung, eine Anordnung aus festgeklemmten Bauteilen, von denen zumindest eines ein FKV-Bauteil ist, zu schaffen, die eine sichere Klemmverbindung gewährleistet.

Diese Aufgabe wird mit einer erfindungsgemäßen Anordnung gemäß Anspruch 1 gelöst.

Bevorzugte Ausgestaltungen der Erfindung sind Gegenstand der Unteransprüche.

Gemäß einem Aspekt der Erfindung umfasst eine Anordnung ein erstes Bauteil und ein zweites Bauteil, wobei zumindest das erste oder das zweite Bauteil ein Faser-Kunststoff-Verbund-Bauteil ist. Bei der Anordnung gemäß dem Aspekt der Erfindung handelt es sich insbesondere um eine in/an einem Kraftfahrzeug oder an einem Kraftrad angeordnete Anordnung zweier entsprechender Bauteile.

Das Faser-Kunststoff-Verbund-Bauteil ist insbesondere dadurch ausgebildet, dass eine Verstärkungsfaser in eine Kunststoffmatrix eingebettet ist. Der die Matrix des FKV-Bauteils bildende Kunststoff-Matrixwerkstoff kann beispielsweise ein Duroplast oder auch ein Thermoplast sein.

In Abhängigkeit von der bestimmungsgemäßen Verwendung des FKV-Bauteils können verschiedene Arten von Verstärkungsfasern zum Einsatz kommen, beispielsweise anorganische Verstärkungsfasern (Basalt-, Bor-, Glas-, Keramik- und Kieselsäurefasern), metallische Verstärkungsfasern (Stahl-, Aluminium-, Kupfer-, allgemein Metall- und Metalllegierungsfasern), organische Verstärkungsfasern (Aramid-, Kohlenstoff-, Polyester-, Nylon-, Polyethylen- und Plexiglasfasern) und Naturfasern (Holz- und Flachsfasern).

In dem FKV-Bauteil können die eingebetteten Verstärkungsfasern in verschiedenen Längen vorliegen, wodurch unterschiedliche Steifigkeits- und Festigkeitseigenschaften erzielt werden können. Bei Verwendung von Endlosfasern, d.h. Verstärkungsfasern, die vollständig durch das FKV-Bauteil hindurchlaufen, werden die höchsten Steifigkeits- bzw. Festigkeitswerte erreicht.

Die vorgenannten Verstärkungsfasern können innerhalb des Bauteils verschiedene Strukturen aufweisen. Die Endlosfasern können beispielsweise zu Geweben verwebt oder in Form von Gelegen, bei denen die Endlosfasern parallel angeordnet sind, vorliegen. Andere Arten von Verstärkungsfaserstrukturen sind beispielsweise Gestricke, Geflechte, Matten und Vliese.

Das erste und zweite Bauteil sind zur Erzeugung einer Klemmverbindung der Bauteile durch eine bevorzugt unmittelbar auf die Kunststoffmatrix wirkende Dehnschraube, die eine die Klemmverbindung bewirkende bevorzugt unmittelbar auf die Kunststoffmatrix wirkende Klemmkraft erzeugt und ein Kriechverhalten des Faser-Kunststoff-Verbund-Bauteils ausgleicht, miteinander verbunden.

Durch die Verwendung einer Dehnschraube wird erfindungsgemäß das Kriechverhalten des FKV-Bauteils ausgeglichen, weil sich die Dehnschraube wie eine weiche Zugfeder verhält. Eine solche Dehnschraube weist einen gegenüber ihrem Gewinde schlankeren Schaft auf, der insbesondere derart elastische Eigenschaften aufweist, dass das Kriechverhalten des die Kunststoffmatrix des FKV-Bauelements bildenden Kunststoffmatrixwerkstoffs ausgleicht.

Je nachdem, zu welchem Abschnitt des Kraftfahrzeuges das erste Bauteil und das zweite Bauteil gehören, wird die Dehnschraube entsprechend dimensioniert.

Bevorzugt ist die Dehnschraube zur Klemmung des ersten und zweiten Bauteils durch entsprechende Durchgänge in den Bauteilen geführt und zur Erzeugung der Klemmverbindung der Bauteile auf einer Seite mit einer Mutter versehen.

In der Anordnung gemäß dem Aspekt der Erfindung ist die Dehnschraube durch eine zusätzliche Dehnhülse geführt, die zusätzlich zur Dehnschraube das Kriechverhalten des Faser-Kunststoff-Verbund-Bauteils ausgleicht und insbesondere bei dünnen Bauteilen eine Mindestlänge der Dehnschraube ermöglicht.

Bei der eingesetzten Dehnhülse kann es sich beispielsweise um eine solche mit und ohne Flanschring handeln.

Beispielsweise kann auf jeder Seite der Anordnung eine Dehnhülse angeordnet sein. Alternativ hierzu kann auch nur auf einer Seite der Anordnung eine Dehnhülse angeordnet sein.

Die eingesetzte Dehnhülse ist bevorzugt aus Metall ausgebildet und wird in Abhängigkeit von den bestimmungsgemäß während der Lebensdauer der Anordnung wirkenden Kräfte dimensioniert.

Die eingesetzte Dehnhülse bzw. die eingesetzten Dehnhülsen sind zusätzlich zu der Dehnschraube so ausgebildet, dass ihr elastisches Verhalten ein durch das Kriechverhalten des Faser-Kunststoff-Verbund-Bauteils bewirktes Setzen der Schraubenverbindung ausgeglichen wird.

Damit die Dehnhülse ihr entsprechendes elastisches Verhalten aufweist, kann sie beispielsweise geschlitzt sein, insbesondere in Axialrichtung der Dehnschraube.

Bevorzugte Materialien der Dehnhülse sind beispielsweise Metalle, wie z.B. Titan, entsprechende Metalllegierungen oder auch dickwandige kriechfeste Kunststoffe.

Für die Materialien der Dehnschraube gilt Selbiges.

Bei der verwendeten Mutter, die zur Herstellung der Schraubverbindung und zur Erzeugung der für die Klemmverbindung notwendigen Klemmkraft dient, handelt es sich beispielsweise um eine Mutter, die eine konkave Auflagefläche, die auf dem entsprechenden Bauteil aufliegt, aufweist.

Die Mutter kann ebenfalls bevorzugt aus einem Metall, einer Metalllegierung oder aus einem kriechfesten Kunststoff hergestellt sein. Die Dehnhülse ist beispielsweise zwischen der Mutter und dem auf der Seite der Mutter liegenden Bauteilteil angeordnet.

Alternativ ist die Dehnhülse zwischen einem Schraubenkopf der Dehnschraube und dem auf einer Seite des Schraubenkopfes liegenden Bauteilteil angeordnet.

Die erfindungsgemäße Anordnung ist bevorzugt, wenn das erste und zweite Bauteil ein Faser-Kunststoff-Verbund-Bauteil ist. In diesem Fall umfasst das erste Bauteil und das zweite Bauteil bevorzugt eine Korrosionsschutzschicht, die auf einer dem jeweils anderen Bauteil abgewandten Seite angeordnet ist und an der ein Schraubenkopf der Dehnschraube, eine an der Dehnschraube befestigte Mutter oder die Dehnhülse anliegt.

Letztendlich bevorzugt ist das erste Bauteil ein Faser-Kunststoff-Verbund-Bauteil und das zweite Bauteil ein Metallbauteil. In diesem Fall umfasst das erste Bauteil bevorzugt eine Korrosionsschutzschicht, die auf einer dem zweiten Bauteil zugewandten Oberfläche angeordnet ist, und eine Korrosionsschutzschicht, die auf einer dem zweiten Bauteil abgewandten Seite angeordnet ist. Ein Schraubenkopf der Dehnschraube, eine an der Dehnschraube befestigte Mutter oder die Dehnhülse liegen insbesondere an der entsprechenden Korrosionsschutzschicht an.

Die im Vorhergehenden erläuterten Korrosionsschutzschichten werden insbesondere bevorzugt dann verwendet, wenn das Faser-Kunststoff-Verbund-Bauteil aus einem Kohlestofffaser-Kunststoff-Verbund hergestellt bzw. geformt ist. Die Korrosionsschutzschichten trennen in diesem Fall die an dem Bauteil anliegenden Flächen der Dehnschraube, der Dehnhülse oder der Mutter galvanisch von dem Bauteil. Selbiges gilt, wenn eines der beiden Bauteile ein Metallbauteil ist und zwischen beiden Bauteilen eine zusätzliche Korrosionsschutzschicht angeordnet ist.

Durch solche zusätzlichen Korrosionsschutzschichten wird vorteilhafterweise eine Korrosion, die zur Schädigung der Schraubenverbindung führt, unterbunden.

Insgesamt wird durch die erfindungsgemäße Anordnung eine sichere und dauerhafte Klemmverbindung geschaffen, wobei keine zusätzlichen in das FKV-Bauteil integrierten Elemente, wie Metallbuchsen, notwendig sind. Die erfindungsgemäße Anordnung sorgt insoweit auch für eine Gewichtsreduktion, weniger Bauraumbedarf und einen einfachen Montageprozess mit wenigen Prozessschritten.

Im Folgenden werden bevorzugte Varianten der erfindungsgemäßen Anordnung unter Bezug auf die beigefügten Zeichnungen erläutert.

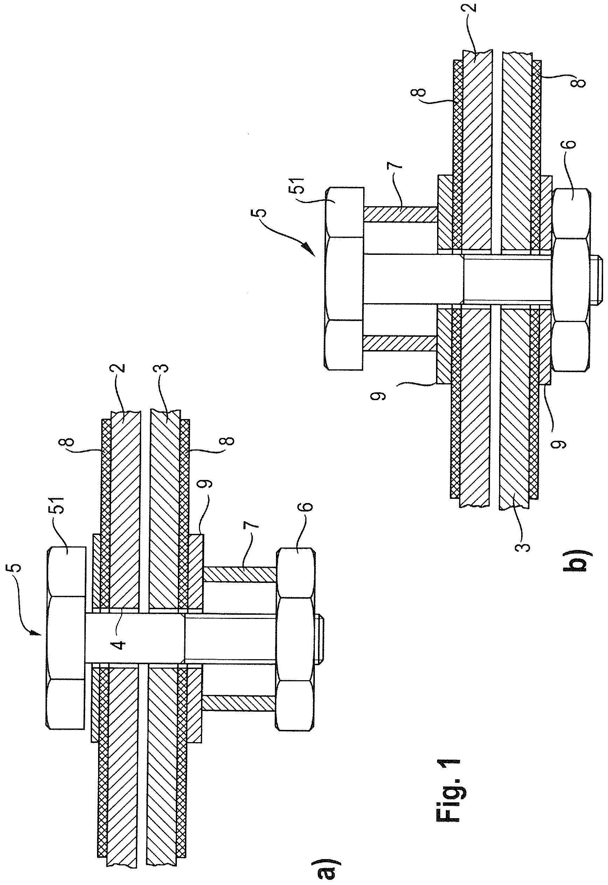

**Fig. 1a und 1b** zeigen eine erste Variante der erfindungsgemäßen Anordnung, bei der ein erstes Faser-Kunststoff-Verbund-Bauteil und ein zweites Faser-Kunststoff-Verbund-Bauteil über eine Dehnschraubenverbindung aneinander befestigt sind, wobei eine zusätzliche Dehnhülse entweder zwischen einem Schraubenkopf der Dehnschraube oder einer an der Dehnschraube befestigten Mutter und dem entsprechenden Bauteil angeordnet ist.

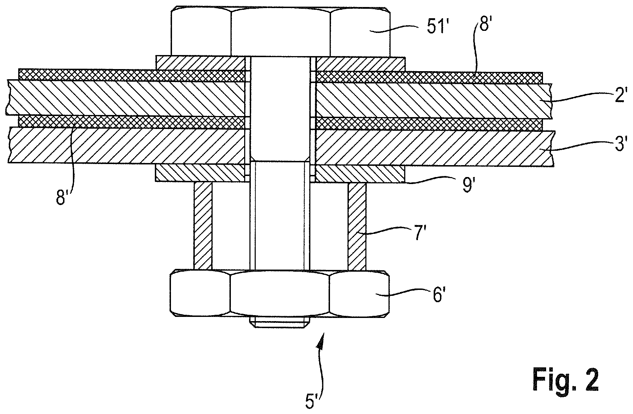

**Fig. 2** zeigt eine zweite bevorzugte Variante der erfindungsgemäßen Anordnung, bei der ein erstes Bauteil ein Faser-Kunststoff-Verbund-Bauteil ist und ein zweites Bauteil ein Metallbauteil ist, wobei diese Bauteile über eine Dehnschraubenverbindung aneinander befestigt sind.

Fig. 1a und 1b zeigen eine erste Variante einer erfindungsgemäßen Anordnung, wobei ein erstes Bauteil 2 und ein zweites Bauteil 3 über eine Klemmverbindung aneinander befestigt sind.

Das erste Bauteil 2 und das zweite Bauteil 3 sind bevorzugt in dieser Variante jeweils ein Faser-Kunststoff-Verbund-Bauteil, bei dem eine Verstärkungsfaser in eine Kunststoffmatrix, beispielsweise eine thermoplastische oder duroplastische Kunststoffmatrix, eingebettet ist.

In jedem der Bauteile 2, 3 ist eine Durchgangsöffnung 4 ausgebildet, durch die eine Dehnschraube 5 geführt ist. Durch die Dehnschraube 5 wird die Klemmverbindung der Bauteile 2, 3 erzeugt, wobei hierfür die durch die Bauteile 2, 3 geführte Dehnschraube 5 auf einer dem Bauteil 3 zugewandten Seite mit einer Mutter 6 versehen ist.

Die Mutter 6 wird an einem entsprechenden Gewinde der Dehnschraube 5 befestigt, wobei zwischen dem Bauteil 3 und der Mutter 6 noch eine zusätzliche Dehnhülse 7 angeordnet ist. Dementsprechend wird die Klemmverbindung durch einen Kraftschluss zwischen einem an dem Bauteil 2 anliegenden Dehnschraubenkopf 51 der Dehnschraube 5 und der über die Dehnhülse 7 an dem Bauteil 3 anliegenden Mutter 6 erzeugt.

Insbesondere der die Kunststoffmatrix bildende Kunststoffmatrixwerkstoff der Faser-Kunststoff-Verbund-Bauteile 2, 3 zeigt während der Lebensdauer der Anordnung ein Kriechverhalten, das zu einem Setzen der Schraubenverbindung führen kann. Damit einem solchen Setzen bzw. einem durch das Kriechverhalten verursachten Verlust der durch die Klemmverbindung bewirkten Klemmkraft entgegengewirkt wird, wird die Schraubenverbindung erfindungsgemäß mittels einer Dehnschraube 5 und durch die zusätzliche Dehnhülse 7, die zwischen der Mutter 6 und dem Bauteil 3 angeordnet ist, realisiert. Sowohl die Dehnschraube 5 als auch die Dehnhülse 7 weisen ein solches elastisches Verhalten auf, dass das Kriechverhalten des Faser-Kunststoff-Verbund-Bauteils ausgeglichen wird und ein Lösen der Klemmverbindung verhindert wird.

Die genannte durch die Dehnschraube 5 und Dehnhülse 7 verwirklichte Klemmverbindung ermöglicht es, dass die Bauteile 2, 3 direkt aneinander festgeklemmt werden können, ohne dass zusätzliche in die Bauteile integrierte Hülsen verwendet werden müssen.

Fig. 1b zeigt eine alternative Anordnung der Dehnhülse 7. In dem in Fig. 1b gezeigten Fall ist die Dehnhülse 7 zwischen einem Schraubenkopf 51 der Dehnschraube 5 und dem dem Schraubenkopf 51 zugewandten Bauteil 2 angeordnet.

Wenn die Verstärkungsfasern der Faser-Kunststoff-Verbund-Bauteile 2, 3 aus einer Kohlenstofffaser gebildet sind, ist es insbesondere bevorzugt, dass jeweils eine Korrosionsschutzschicht 8 auf der dem Schraubenkopf 51 zugewandten Seite des Bauteils 2 und einer der Dehnhülse 7 bzw. der Mutter 6 zugewandten Seite des Bauteiles 3 vorgesehen ist.

Die Korrosionsschutzschichten 8 sorgen für eine galvanische Trennung zwischen der Dehnschraube 5, der Dehnhülse 7 oder der Mutter 6 und dem jeweiligen Bauteil 2, 3. Dies wirkt insbesondere einer die Klemmverbindung schädigenden Korrosion der Dehnschraube 5, der Dehnhülse 7 oder der Mutter 6 entgegen.

Bei der Korrosionsschutzschicht handelt es sich bevorzugt um eine Glasfaserschicht, die bei der Herstellung des entsprechenden Faser-Kunststoff-Verbund-Bauteils 2, 3 mit in die Kunststoffmatrix integriert wird.

Fig. 2 zeigt eine zweite Variante der erfindungsgemäßen Anordnung.

Diese Variante unterscheidet sich von der in Fig. 1a gezeigten Variante lediglich dadurch, dass das zweite Bauteil 3' nicht aus einem Faser-Kunststoff-Verbund hergestellt sondern aus einem Metall, beispielsweise Aluminium, ausgebildet ist.

In dieser bevorzugten Variante der erfindungsgemäßen Anordnung wird insbesondere eine Korrosionsschutzschicht 8' zwischen den Bauteilen 2', 3' angeordnet und nicht auf einer der Dehnhülse 7' bzw. der Mutter 6' zugewandten Seite des Bauteiles 3'.

In allen vorgenannten bevorzugten Varianten der erfindungsgemäßen Anordnung kann noch eine Unterlegscheibe 9, 9' zwischen dem Schraubenkopf 51, 51' und dem entsprechenden Bauteil bzw. zwischen der Dehnhülse 7, 7' und dem entsprechenden Bauteil bzw. zwischen der Mutter 6, 6' und dem entsprechenden Bauteil angeordnet sein.

## Patentansprüche

1. Anordnung aus einem ersten Bauteil (2) und einem zweiten Bauteil (3), wobei
zumindest das erste oder das zweite Bauteil (2; 3) ein Faser-Kunststoff-Verbund-Bauteil ist; und
das erste und zweite Bauteil (2, 3) zur Erzeugung einer Klemmverbindung der Bauteile durch eine Dehnschraube (5), die eine die Klemmverbindung bewirkende Klemmkraft erzeugt und ein Kriechverhalten des Faser-Kunststoff-Verbund-Bauteils ausgleicht, miteinander verbunden sind, **dadurch gekennzeichnet, dass**
die Dehnschraube (5) zur Klemmung des ersten und zweiten Bauteils (2, 3) durch entsprechende Durchgänge in den Bauteilen (2, 3) geführt ist und zur Erzeugung der Klemmverbindung der Bauteile auf einer Seite mit einer Mutter (6) versehen ist, und
die Dehnschraube (5) durch eine zusätzliche Dehnhülse (7) geführt ist, die zusätzlich zur Dehnschraube (5) das Kriechverhalten ausgleicht.

2. Anordnung gemäß Anspruch 1, wobei
die Dehnhülse (7) zwischen der Mutter (6) und dem auf der Seite der Mutter liegenden Bauteilteil (3) angeordnet ist.

3. Anordnung gemäß Anspruch 1, wobei
die Dehnhülse (7) zwischen einem Schraubenkopf (51) der Dehnschraube (5) und dem auf einer Seite des Schraubenkopfes (51) liegenden Bauteilteil (2) angeordnet ist.

4. Anordnung gemäß einem der Ansprüche 1 bis 3, wobei
das erste und zweite Bauteil (2, 3) ein Faser-Kunststoff-Verbund-Bauteil sind, wobei
das erste Bauteil (2) und das zweite Bauteil (3) eine Korrosionsschutzschicht (8), die auf einer dem jeweils anderen Bauteil abgewandten Seite angeordnet ist und an der ein Schraubenkopf (51) der Dehnschraube (5), eine an der Dehnschraube (5) befestigte Mutter (6) oder die Dehnhülse (7) anliegt, aufweist.

5. Anordnung gemäß einem der Ansprüche 1 bis 3, wobei das erste Bauteil (2') ein Faser-Kunststoff-Verbund-Bauteil ist und das zweite Bauteil (3') ein Metallbauteil ist, wobei
das erste Bauteil (2') eine Korrosionsschutzschicht (8'), die auf einer dem zweiten Bauteil (3') zugewandten Oberfläche angeordnet ist, und eine Korrosionsschutzschicht (8'), die auf einer dem zweiten Bauteil (3') abgewandten Seite angeordnet ist und an der ein Schraubenkopf (51) der Dehnschraube (5), eine an der Dehnschraube (5') befestigte Mutter (6') oder die Dehnhülse (7') anliegt, aufweist.

## Claims

1. An arrangement formed of a first component (2) and a second component (3), wherein
at least the first or the second component (2; 3) is a fibre/plastics material composite component; and
the first and second component (2, 3) are connected together to produce a clamping connection of the components by an expansion bolt (5) which generates a clamping force which brings about the clamping connection and compensates for a creep behaviour of the fibre/plastics material composite component, **characterised in that**
the expansion bolt (5) to clamp the first and second component (2, 3) is passed through corresponding passages in the components (2, 3) and to generate the clamping connection of the components is provided on one side with a nut (6), and
the expansion bolt (5) is passed through an additional expansion sleeve (7) which compensates for the creep behaviour additionally to the expansion bolt (5).

2. An arrangement according to Claim 1, wherein
the expansion sleeve (7) is arranged between the nut (6) and the component part (3) located on the side of the nut.

3. An arrangement according to Claim 1, wherein
the expansion sleeve (7) is arranged between a bolt head (51) of the expansion bolt (5) and the component part (2) which is located on one side of the bolt head (51).

4. An arrangement according to one of Claims 1 to 3, wherein
the first and second components (2, 3) are a fibre/plastics material composite component, wherein
the first component (2) and the second component (3) have an anticorrosion layer (8) which is arranged on a side remote from the other component in each case and against which a bolt head (51) of the expansion bolt (5), a nut (6) fastened to the expansion bolt (5) or the expansion sleeve (7) lies.

5. An arrangement according to one of Claims 1 to 3, wherein the first component (2') is a fibre/plastics material composite component and the second component (3') is a metal component, wherein
the first component (2') has an anticorrosion layer (8') which is arranged on a surface facing the second component (3'), and an anticorrosion layer (8') which is arranged on a side remote from the second component (3') and against which a bolt head (51) of the expansion bolt (5), a nut (6') fastened to the expansion bolt (5') or the expansion sleeve (7') lies.

## Revendications

1. Ensemble formé d'une première pièce (2) et d'une seconde pièce (3) dans lequel :
- au moins la première ou la seconde pièce (2, 3) est une pièce en matière plastique composite renforcée par des fibres, et
- pour générer une liaison par serrage des pièces, la première et la seconde pièce (2, 3), les pièces étant reliées et traversées par une vis extensible (5), cette vis générant une force de serrage pour la liaison serrée et compensant le comportement au fluage de la pièce en matière composite renforcée par des fibres,
**caractérisé en ce que**
- la vis extensible (5) traverse des perçages correspondant des pièces (2, 3) pour serrer la première et la seconde pièce (2, 3) et d'un côté, elle comporte un écrou (6) pour générer la liaison serrée des pièces, et
- la vis extensible (5) traverse un manchon extensible (7) complémentaire qui compense le comportement au fluage en complément de la vis extensible (5).

2. Ensemble selon la revendication 1, dans lequel
le manchon extensible (7) est placé entre l'écrou (6) et la pièce (3) située du côté de l'écrou.

3. Ensemble selon la revendication 1, dans lequel
le manchon extensible (7) est placé entre la tête (51) de la vis extensible (5) et la pièce (2) qui se trouve du côté de la tête (51).

4. Ensemble selon l'une des revendications 1 à 3, dans lequel la première et la seconde pièce (2, 3) sont des pièces en matière plastique composite renforcée par des fibres, et
la première pièce (2) et la seconde pièce (3) ont un revêtement anticorrosion (8) sur le côté respectif non tourné vers l'autre pièce et un écrou (6) fixé à la vis extensible (5) ou le manchon extensible (7) s'applique contre la tête (51) de la vis extensible (5).

5. Ensemble selon l'une des revendications 1 à 3, dans lequel
la première pièce (2') est une pièce en matière plastique composite renforcée par des fibres et la seconde pièce (3') est une pièce métallique, et la première pièce (2') a une couche anticorrosion (8') sur la surface tournée vers la seconde pièce (3') et une couche anticorrosion (8') sur le côté non tourné vers la seconde pièce (3') et un écrou (6') fixé à la vis extensible (5) ou le manchon extensible (7') s'applique contre la tête (51) de la vis extensible (5).
